# EUROPÄISCHE PATENTSCHRIFT

(11) **EP 3 134 188 B1**
(45) Veröffentlichungstag und Bekanntmachung des Hinweises auf die Patenterteilung: **28.02.2018**
(21) Anmeldenummer: 15720574.1
(22) Anmeldetag: 23.04.2015
(51) Int. Cl.: A63B 69/12, A63B 71/06, G01L 1/00, E04H 4/14, A63B 24/00, G01L 5/00, H01H 31/14, A63B 5/10, H01H 35/00, H01H 3/14

(54) **WENDEPLATTE ZUM MESSEN VON ABSTOSSKRÄFTEN VON SCHWIMMERN**
TURNING PLATE FOR MEASURING THE PUSHING-OFF FORCES OF SWIMMERS
PLAQUE DE RETOURNEMENT POUR MESURER DES FORCES DE POUSSÉE DE NAGEURS

(30) Priorität: 25.04.2014 CH 628142014
(43) Veröffentlichungstag der Anmeldung: 01.03.2017
(73) Patentinhaber: Kistler Holding AG, 8408 Winterthur (CH)
(72) Erfinder: HOFMANN, Adrian, CH-8464 Ellikon am Rhein (CH); ULLRICH, Florian, CH-8413 Neftenbach (CH); WEHRLI, Marc, CH-4143 Dornach (CH); GASSER, Reto, CH-3253 Schnottwil (CH)
(86) Internationale Anmeldenummer: PCT/CH2015/000060
(87) Internationale Veröffentlichungsnummer: WO 2015/161390

(56) Entgegenhaltungen:
- EP-A2- 1 548 410
- US-A- 3 230 325
- US-A- 3 522 398
- US-A- 3 784 768
- US-A- 3 916 214

## Beschreibung

### Technisches Gebiet

Die Erfindung betrifft eine Wendeplatte zum Messen von Abstosskräften von Schwimmern in einem Schwimmbecken beim Wenden, umfassend eine steife Platte, die parallel zur Beckenwand stabil befestigt werden kann, sowie Kraftsensoren zum Ermitteln der Abstosskräfte.

### Stand der Technik

Sportler verwenden heutzutage mehr und mehr technische Hilfsmittel, um im Training die Bewegungsabläufe zu optimieren. Im Schwimmtraining werden daher beispielsweise die Absprungkräfte von den Startblöcken gemessen. Nun sind auch Vorrichtungen an der Beckenwand bekannt, welche die Kräfte erfassen, welche von den Schwimmern beim Wenden, also beim Richtungswechsel an der Beckenwand auftreten. Problematisch an solchen herkömmlichen Wendeplatten, die typischerweise etwa 900x600mm aufweisen bei einer Dicke von 100mm, sind insbesondere die Montagemöglichkeiten. Da die Wendeplatten mit etwa 180kg sehr schwer sind, ist in der Regel ein Kran notwendig, um eine solche zu montieren. Zudem müssen Bohrungen an der Beckenwand angebracht werden, was sehr aufwändig ist und die Dichtigkeit des Schwimmbeckens zerstören kann. Zudem müssen die Wendeplatten korrosionsbeständig sein, insbesondere auch in sehr stark gechlortem Wasser, in denen sie eingesetzt werden. Die Dicke von 100 mm wird auch immer weniger geduldet, weil die Wendeplatte nicht beträchtlich anders sein sollte als die Schwimmbeckenwand. Dies trifft insbesondere beim Start beim Rückenschwimmen zu, wenn sich die Schwimmer an einem Bügel am Startblock halten und die Füsse an der Wendeplatte abstützen. Das Dokument US3916214 beschreibt eine Wendeplatte, die die Merkmale des Oberbegriffes des Anspruchs 1 enthält.

### Darstellung der Erfindung

Aufgabe der vorliegenden Erfindung ist es demnach, eine Wendeplatte zu beschreiben, welche einfacher zu montieren ist.

Die Aufgabe wird gelöst durch eine Wendeplatte mit den Merkmalen des Anspruchs 1. Insbesondere weist die erfindungsgemässe Wendeplatte einen steifen, rechteckigen Rahmen, an welchem die Platte an vier Stellen jeweils über einen Kraftsensor mit einer Spannschraube unter Vorspannung befestigt ist. Zudem ist neben jedem dieser Sensoren ein Einstellbolzen am Rahmen angeordnet, der aus dem Rahmen herausgefahren werden kann zum Abstützen des Rahmens an der Beckenwand. Der Rahmen weist mindestens einen, vorzugsweise zwei steife Befestigungsbügel auf zur Montage am Beckenrand, vorzugsweise an einem Startblock.

Eine derartige Wendeplatte kann bequem von zwei Personen ins Becken abgelassen werden und schliesslich an den Befestigungsbügeln an dafür vorgesehenen Montagestellen arretiert werden, die oberhalb der Wasseroberfläche des Beckens angebracht sind, in der Regel auf dem Beckenrand oder an einem Startblock. Sobald die Wendeplatte an den Befestigungsbügeln arretiert ist, kann sie mit Hilfe der Einstellbolzen am Beckenrand verspannt werden. Daher sind keine Bohrungen an der Beckenwand erforderlich, was ein grosser Vorteil darstellt. Weiter vorteilhafte Ausführungsformen sind in den Unteransprüchen beschrieben.

### Kurze Beschreibung der Zeichnungen

Im Folgenden wird die Erfindung unter Beizug der Zeichnungen näher erklärt. Es zeigen
- Fig. 1: eine schematische Darstellung im Querschnitt eines Ausschnitts eines Schwimmbeckens mit einer daran angebrachter erfindungsgemässen Wendeplatte;
- Fig. 2: eine Darstellung einer erfindungsgemässen Wendeplatte in perspektivischer Ansicht;
- Fig. 3: einen Querschnitt einer erfindungsgemässen Wendeplatte im Bereich eines Sensors und eines Einstellbolzens;
- Fig. 4: eine Montagevorrichtung zum Montieren einer erfindungsgemässen Wendeplatte, in perspektivischer Ansicht.

### Wege zur Ausführung der Erfindung

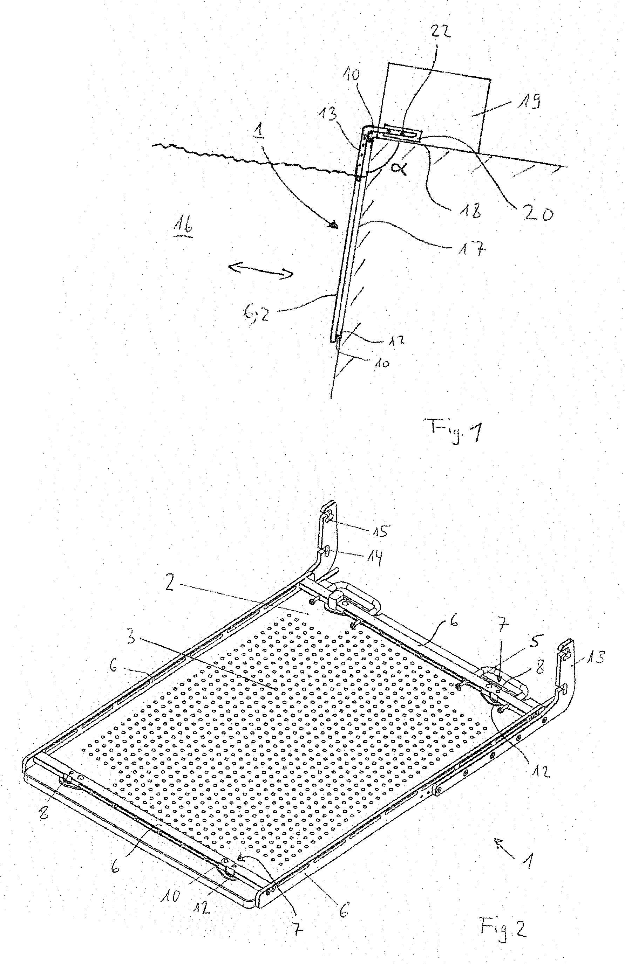

Fig. 1 zeigt ein Teil eines Schwimmbeckens 16 mit einer Beckenwand 17 und einem Beckenrand 18, auf dem ein Startblock 19 angeordnet ist. Dieser Startblock 19 weist eine Montagevorrichtung 20 auf, an der eine erfindungsgemässe Wendeplatte 1 montiert ist. Die Wendeplatte 1 könnte auch direkt oder indirekt auf dem Beckenrand 18 montiert sein.

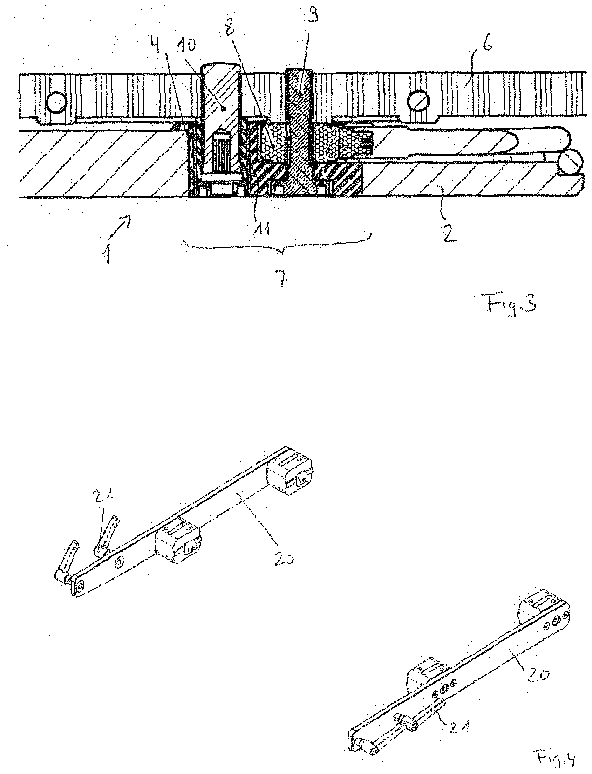

Fig. 2 zeigt eine solche erfindungsgemässe Wendeplatte 1 in perspektivischer Ansicht, in Fig. 3 ist eine Detailansicht der Wendeplatte 1 im Bereich 7 eines Kraftsensors 8 und eines Einstellbolzens 10 dargestellt.

Die Wendeplatte 1 dient den Schwimmern zum Messen von Abstosskräften in einem Schwimmbecken 16 beim Wenden und umfasst eine steife Platte 2, die parallel zur Beckenwand 17 stabil befestigt werden kann, sowie Kraftsensoren 8 zum Ermitteln der Abstosskräfte. Es können beispielsweise piezoelektrische oder resistive Kraftsensoren 8 verwendet werden, insbesondere dreidimensional messende.

Die erfindungsgemässe Wendeplatte 1 umfasst weiter einen steifen, rechteckigen Rahmen 6, an welchem die Platte 2 an vier Stellen 7 jeweils über einen Kraftsensor 8 mit einer Spannschraube 9 unter Vorspannung befestigt ist.

Neben jedem dieser Sensoren 8 ist ein Einstellbolzen 10 am Rahmen 6 angeordnet, der aus dem Rahmen 6 herausgefahren werden kann zum Abstützen des Rahmens 6 an der Beckenwand 17. Der Rahmen 6 weist mindestens einen, vorzugsweise zwei steife Befestigungsbügel 13 auf zur Montage am Beckenrand 18, vorzugsweise an einem Startblock 19.

Eine solche Wendeplatte 1 lässt sich einfach in ein Schwimmbecken 16 bringen und ausserhalb des Wassers montieren, ohne dass dabei die Beckenwand 17 beschädigt werden muss. Die Einstellbolzen 10 können beispielsweise mit einem Inbusschlüssel gegen die Beckenwand herausgefahren werden, bis die Wendeplatte 1 gleichmässig verspannt ist. Dazu ist es von Vorteil, wenn die Platte 2 fluchtend mit jedem Einstellbolzen 10 eine Aussparung 4 aufweist, welche den Zugang zum Einstellbolzen 10 erlaubt. In dieser Aussparung 4 befindet sich eine Halterung, die den Einstellbolzen 10 führt. Dieser ist am Rahmen 6 angebracht, sodass die Platte 2 nur durch die Vorspannschraube 9 und den Kraftsensor 8 mit dem Rahmen 6 verbunden ist. Halteplatten 12 können hinter den Einstellbolzen 10 angebracht sein, um die Beckenwand 17 zu schützen.

Vorzugsweise besteht die Platte 2 aus Carbon, beispielsweise aus laminiertem Carbon mit chlorwasserbeständigem Harz. Dies führt zu einer grossen Gewichtsreduktion der Wendeplatte 1. Zudem kann mit der angegebenen Konstruktion gewährleistet werden, dass die gesamte Dicke der Wendeplatte 1 nicht dicker als 50mm ist, inklusive die ausgefahrenen Einstellbolzen 10.

Zudem ist es von Vorteil, wenn die Platte 2 eine Vielzahl von Bohrungen 3 aufweist, durch die eine Bugwelle hindurchtreten kann, die ein Schwimmer vor sich herschiebt beim Annähern an die Wendeplatte 1. Es hat sich gezeigt, dass mit dieser Massnahme Messfehler vermieden werden können. Zudem ist es sehr wichtig, dass die Wendeplatte 1 stets mit dem Einstellbolzen 10 resp. den daran angebrachten Halteplatten 12 am Beckenrand 18 anliegen muss, da die Messung sonst ebenfalls verfälscht wird.

Vorzugsweise besteht der Rahmen 6 aus hochwertigem Edelstahl, der beständig ist gegen Chlor und Ozon. Dies betrifft auch alle Schrauben und zusätzliche Komponenten der Wendeplatte 1. Da Schwimmbadwasser sehr aggressiv sein kann.

Der Rahmen 6 weist vorzugsweise mindestens einen, besser zwei Griffe 5 auf, welche die Handhabung bei der Montage erleichtern.

In einer bevorzugten Ausgestaltung umfasst die Wendeplatte 1 eine Montagevorrichtung 20, dargestellt in Fig. 4, welche fest am Beckenrand 18 oder an einem Startblock 19 anbringbar ist, zum Aufnehmen des oder der Befestigungsbügel 13. Die Montagevorrichtung 20 weist vorzugsweise mindestens einen Schnellverschluss 21 auf zur schnellen Montage der Wendeplatte 1 an der Montagevorrichtung 20.

Die Aufnahme zwischen Montagevorrichtung 20 und Befestigungsbügel 13 kann neigungsverstellbar ausgestaltet sein, sodass die Wendeplatte 1 mit einer Neigung zur Senkrechten bis zu 5 Grad, vorzugsweise bis zu 10 Grad befestigt werden kann. Dies ist dann wichtig, wenn der Winkel α der Beckenwand 17 mehr als 90° zum Beckenrand 18 beträgt. So kann die Lage der Wendeplatte 1 optimal an die Neigung der Beckenwand 17 angepasst werden.

Die Aufnahme zwischen Montagevorrichtung 20 und Befestigungsbügel 13 kann zudem horizontal in Schwimmrichtung, mit einem Pfeil in Fig. 1 angegeben, verschiebbar ist, sodass die Wendeplatte 1 möglichst nahe an der Beckenwand 17 befestigt werden kann. Alternativ dazu oder zusätzlich dazu kann auch die Montagevorrichtung 20 an einem Startblock 19 horizontal in Schwimmrichtung verschiebbar angebracht werden.

Vorzugsweise wird jeder Bügel an zwei Stellen mit einer festen Komponente am Beckenrand eingehängt, die dann wiederum beispielsweise mit Schnellverschlüssen 21 arretiert werden. Dabei weist jeder Befestigungsbügel 13 zwei Schlitze 14 auf, wovon beide Schlitze 14 eine L-Form aufweisen und mindestens einer der beiden Schlitze am inneren Ende des Ls einen weiten Querschlitz 15 aufweist, zum Variieren des Neigungswinkels α bei der Montage.

Die erfindungsgemässe Wendeplatte 1 kann demnach derart ausgestaltet sein, dass sie, bei einer Grösse der Platte 2 von etwa 900x600 mm, mobil ist, wobei die weniger als 30kg Gesamtgewicht aufweist. Sie lässt sich bequem durch zwei Personen tragen und montieren.

### Bezugszeichenliste

- 1: Wendeplatte
- 2: Platte
- 3: Bohrungen
- 4: Aussparung
- 5: Griff
- 6: Rahmen
- 7: Stelle für Sensor und Einstellbolzen
- 8: Kraftsensoren
- 9: Spannschraube
- 10: Einstellbolzen
- 11: Hülse
- 12: Halteplatte
- 13: Befestigungsbügel
- 14: Schlitz, L-förmiger Schlitz
- 15: Querschlitz
- 16: Schwimmbecken
- 17: Beckenwand
- 18: Beckenrand
- 19: Startblock
- 20: Montagevorrichtung
- 21: Schnellverschluss
- α: Winkel des Beckenrands

## Patentansprüche

1. Wendeplatte zum Messen von Abstosskräften von Schwimmern in einem Schwimmbecken (16) beim Wenden, umfassend eine steife Platte (2), die parallel zur Beckenwand (17) stabil befestigt werden kann, sowie Kraftsensoren (8) zum Ermitteln der Abstosskräfte, **dadurch gekennzeichnet, dass** die Wendeplatte (1) einen steifen, rechteckigen Rahmen (6) aufweist, an welchem die Platte (2) an vier Stellen (7) jeweils über einen Kraftsensor (8) mit einer Spannschraube (9) unter Vorspannung befestigt ist.

2. Wendeplatte nach Anspruch 1, **dadurch gekennzeichnet, dass** neben jedem dieser Kraftsensoren (8) ein Einstellbolzen (10) am Rahmen (6) angeordnet ist, der aus dem Rahmen (6) herausgefahren werden kann zum Abstützen des Rahmens (6) an der Beckenwand (17).

3. Wendeplatte nach Anspruch 2, **dadurch gekennzeichnet, dass** der Einstellbolzen (10) gegen die Beckenwand (17) herausfahrbar ist, bis die Wendeplatte (1) gleichmässig verspannt ist.

4. Wendeplatte nach einem der Ansprüche 2 oder 3, dass die Platte (2) fluchtend mit jedem Einstellbolzen (10) eine Aussparung (4) aufweist, welche den Zugang zum Einstellbolzen (10) erlaubt.

5. Wendeplatte nach einem der vorhergehenden Ansprüche, **dadurch gekennzeichnet, dass** der Rahmen (6) mindestens einen, vorzugsweise zwei steife Befestigungsbügel (13) aufweist zur Montage am Beckenrand (18), vorzugsweise an einem Startblock (19).

6. Wendeplatte nach einem der vorhergehenden Ansprüche, **dadurch gekennzeichnet, dass** die Platte (2) aus Carbon, vorzugsweise aus laminiertem Carbon mit chlorwasserbeständigem Harz besteht.

7. Wendeplatte nach einem der vorhergehenden Ansprüche, **dadurch gekennzeichnet, dass** die Platte (2) eine Vielzahl von Bohrungen (3) aufweist, durch die eine Bugwelle hindurchtreten kann.

8. Wendeplatte nach einem der vorhergehenden Ansprüche, **dadurch gekennzeichnet, dass** der Rahmen (6) mit der Platte (2) nicht dicker als 50mm ist.

9. Wendeplatte nach einem der vorhergehenden Ansprüche, **dadurch gekennzeichnet, dass** der Rahmen (6) mindestens einen, vorzugsweise zwei Griffe (5) aufweist, welche die Handhabung bei der Montage erleichtern.

10. Wendeplatte nach Anspruch 5, umfassend eine Montagevorrichtung (20), welche fest am Beckenrand (18) oder an einem Startblock (19) anbringbar ist, zum Aufnehmen des oder der Befestigungsbügel (13).

11. Wendeplatte nach Anspruch 10, **dadurch gekennzeichnet, dass** die Montagevorrichtung (20) mindestens einen Schnellverschluss (21) aufweist zur schnellen Montage der Wendeplatte (1) an der Montagevorrichtung (20).

12. Wendeplatte nach einem der Ansprüche 10 oder 11, **dadurch gekennzeichnet, dass** die Aufnahme zwischen Montagevorrichtung (20) und Befestigungsbügel (13) neigungsverstellbar ausgestaltet ist, sodass die Wendeplatte (1) mit einer Neigung zur Senkrechten bis zu 5 Grad, vorzugsweise bis zu 10 Grad befestigt werden kann.

13. Wendeplatte nach einem der Ansprüche 10 bis 12, **dadurch gekennzeichnet, dass** die Aufnahme zwischen Montagevorrichtung (20) und Befestigungsbügel (13) horizontal in Schwimmrichtung verschiebbar ist, sodass die Wendeplatte (1) möglichst nahe an der Beckenwand (17) befestigt werden kann.

14. Wendeplatte nach einem der Ansprüche 10 bis 13, **dadurch gekennzeichnet, dass** die Montagevorrichtung (20) an einem Startblock (19) horizontal in Schwimmrichtung verschiebbar angebracht werden kann.

15. Wendeplatte nach einem der vorhergehenden Ansprüche, **dadurch gekennzeichnet, dass** jeder Befestigungsbügel (13) an zwei Stellen (7) mit einer festen Komponente am Beckenrand (18) eingehängt werden kann; und/oder dass jeder Befestigungsbügel (13) an zwei Stellen (7) mit einer festen Komponente am Beckenrand (18) eingehängt werden kann, wobei jeder Befestigungsbügel (13) zwei Schlitze (14) aufweist, wovon beide Schlitze (14) eine L-Form aufweisen und mindestens einer der beiden Schlitze (14) am inneren Ende des Ls einen weiten Querschlitz (15) aufweist, zum Variieren des Neigungswinkels α bei der Montage.

16. Wendeplatte nach einem der vorhergehenden Ansprüche, **dadurch gekennzeichnet, dass** sie mobil ist mit weniger als 30kg Gesamtgewicht und eine Fläche von etwa 900x600 mm aufweisen.

## Claims

1. A turning plate for measuring push-off forces of swimmers in a swimming pool (16) during turning, comprising a stiff plate (2) that can be stably attached parallel to the pool wall (17) as well as force sensors (8) for detecting the push-off forces, **characterized in that** the turning plate (1) has a stiff, rectangular frame (6) on which the plate (2) is mounted in four positions (7) under pretension with a clamping screw (9), in each case via a force sensor (8).

2. The turning plate according to claim 1, **characterized in that** next to each of these force sensors (8) an adjusting pin (10) is arranged on the frame (6) that can be moved out of the frame (6) to support the frame (6) on the pool wall (17).

3. The turning plate according to claim 2, **characterized in that** the adjusting pin (10) can be moved out against the pool wall (17) until the turning plate (1) is uniformly tensioned.

4. The turning plate according to any of claims 2 or 3 that the plate (2) has a recess (4) flush with each adjusting pin (10) which enables access to the adjusting pin (10).

5. The turning plate according to any of the preceding claims, **characterized in that** the frame (6) has at least one, preferably two stiff securing brackets (13) for mounting it on the edge of the pool (18), preferably on a starting block (19).

6. The turning plate according to any of the preceding claims, **characterized in that** the plate (2) is made of carbon, preferably of carbon laminated with chlorinated water-resistant resin.

7. The turning plate according to any of the preceding claims, **characterized in that** the plate (2) has a plurality of holes (3) for a bow wave to pass therethrough.

8. The turning plate according to any of the preceding claims, **characterized in that** the frame (6) together with the plate (2) is not thicker than 50 mm.

9. The turning plate according to any of the preceding claims, **characterized in that** the frame (6) has at least one, preferably two handles (5) which facilitate handling during mounting.

10. The turning plate according to claim 5 comprising a mounting device (20) that can be firmly secured on the pool edge (18) or on a starting block (19) to accommodate the securing bracket(s) (13).

11. The turning plate according to claim 10, **characterized in that** the mounting device (20) has at least a quick release means (21) for quick mounting of the turning plate (1) on the mounting device (20).

12. The turning plate according to any of claims 10 or 11, **characterized in that** the accommodation between mounting device (20) and securing bracket (13) is tilt-adjustable so that the turning plate (1) can be mounted with an inclination to the vertical of up to 5 degrees, preferably up to 10 degrees.

13. The turning plate according to any of claims 10 to 12, **characterized in that** the accommodation between mounting device (20) and securing bracket (13) is horizontally slidable in swimming direction so that the turning plate (1) can be attached as close as possible to the pool wall (17).

14. The turning plate according to any of claims 10 to 13, **characterized in that** the mounting device (20) can be attached to a starting block (19) to be horizontally slidable in swimming direction.

15. The turning plate according to any of the preceding claims, **characterized in that** each securing bracket (13) can be attached in two positions (7) by a fixed component to the pool edge (18); and/or that each securing bracket (13) can be attached in two positions (7) by a fixed component to the pool edge (18), each securing bracket (13) having two slits (14) wherein both of said slits (14) are L-shaped and at least one of the two slits (14) has a wide transversal slit (15) at the inner end of the L for varying the inclination angle α during mounting.

16. The turning plate according to any of the preceding claims, **characterized in that** it is movable with a total weight of less than 30 kg and has a surface area of about 900 x 600 mm.

## Revendications

1. Panneau de virage (1) pour mesurer des forces de poussée de nageurs dans une piscine (16) lors du virage, comprenant une plaque rigide (2) qui peut être fixée de manière stable, parallèlement à la paroi (17) du bassin, ainsi que des capteurs de force (8) pour déterminer les forces de poussée, **caractérisé en ce que** ladite panneau de virage (1) comprend un cadre (6) rigide rectangulaire sur lequel la plaque (2) est fixée en quatre emplacements (7) à chaque fois via un capteur de force (8) à l'aide d'une vis de serrage (9) sous prétension.

2. Panneau de virage selon la revendication 1 **caractérisé en ce qu'**un boulon de réglage (10) est disposé sur le cadre (6) à côté de chacun des capteurs de force (8), boulon qui peut être sorti du cadre (6) pour l'appui du cadre (6) contre la paroi (17) du bassin.

3. Panneau de virage selon la revendication 2 **caractérisé en ce que** ledit boulon de réglage (10) peut être déplacé vers la paroi (17) du bassin jusqu'à ce que la panneau de virage (1) soit uniformément tensionnée.

4. Panneau de virage selon l'une quelconque des revendications 2 ou 3 dans laquelle pour chacun des boulons de réglage (10) et aligné en hauteur avec ce dernier la plaque (2) comporte un évidement (4) permettant d'accéder au boulon de réglage (10).

5. Panneau de virage selon l'une quelconque des revendications précédentes **caractérisé en ce que** le cadre (6) présente au moins un, de préférence deux, étrier(s) de fixation (13) rigide (s) pour le montage au bord (18) du bassin, de préférence sur un plot de départ (19).

6. Panneau de virage selon l'une quelconque des revendications précédentes, **caractérisé en ce que** la plaque (2) est fabriquée de carbone, préférentiellement de carbone laminé avec résine résistante à l'eau chlorée.

7. Panneau de virage selon l'une quelconque des revendications précédentes, **caractérisé en ce que** la plaque (2) comprend une pluralité de trous (3) pour laisser une vague de proue passer à travers ces derniers.

8. Panneau de virage selon l'une quelconque des revendications précédentes, **caractérisé en ce que** l'épaisseur du cadre (6) ensemble avec la plaque (2) ne dépasse pas 50 mm.

9. Panneau de virage selon l'une quelconque des revendications précédentes, **caractérisé en ce que** ledit cadre (6) comprend au moins une, de préférence deux poignée (s) (5) facilitant la manipulation lors du montage.

10. Panneau de virage selon la revendication 5 comprenant un dispositif de montage (20) apte a être fixé au bord (18) du bassin ou sur un plot de départ (19) pour l'accommodation du ou des étrier(s) de fixation (13).

11. Panneau de virage selon la revendication 10, **caractérisé en ce que** ledit dispositif de montage (20) comporte au moins un moyen de dégagement rapide (21) pour la fixation rapide de la panneau de virage (1) au dispositif de montage (20).

12. Panneau de virage selon l'une quelconque des revendications 10 or 11, **caractérisé en ce que** l'accommodation entre le dispositif de montage (20) et l'étrier de fixation (13) est ajustable en inclinaison de manière que la panneau de virage (1) peut être installé avec une inclinaison par rapport à la verticale allant jusqu'à 5 degrés, préférentiellement jusqu'à 10 degrés.

13. Panneau de virage selon l'une quelconque des revendications 10 to 12, **caractérisé en ce que** l'accommodation entre le dispositif de montage (20) et l'étrier de fixation (13) peut être coulissé horizontalement dans la direction de nage de manière que la panneau de virage (1) peut être installé aussi près que possible à la paroi (17) du bassin.

14. Panneau de virage selon l'une quelconque des revendications 10 to 13, **caractérisé en ce que** le dispositif de montage (20) peut être installé à un plot de départ (19) de manière qu'il soit coulissable horizontalement dans la direction de nage.

15. Panneau de virage selon l'une quelconque des revendications précédentes, **caractérisé en ce que** chacun étrier de fixation (13) peut être installé au bord (18) du bassin sur deux positions (7) par un élément fixe; et/ou **en ce que** chacun étrier de fixation (13) peut être installé au bord (18) du bassin sur deux positions (7) par un élément fixe, chacun étrier de fixation (13) comprenant deux fentes (14), les deux fentes (14) étant en forme de L et au moins une de ces deux fentes (14) ayant une fente large et transversale (15) à l'extrémité interne du L permettant de varier l'angle d'inclinaison α lors du montage.

16. Panneau de virage selon l'une quelconque des revendications précédentes, **caractérisé en ce qu'**elle est mobile avec un poids total inférieur à 30 kg et présente une surface d'environ 900 x 600 mm.
